Europäisches Patentamt

European Patent Office

Office européen des brevets

(19)

(11) Veröffentlichungsnummer: **0 294 765 B1**

(12) # EUROPÄISCHE PATENTSCHRIFT

(45) Veröffentlichungstag der Patentschrift: **01.04.92**

(51) Int. Cl.⁵: **B21D 37/10**, B23Q 16/00

(21) Anmeldenummer: **88109063.3**

(22) Anmeldetag: **07.06.88**

(54) **Präzisionsstanzautomat und zugehöriges Verfahren zum Werkzeugwechsel.**

(30) Priorität: **10.06.87 DE 3719370**

(43) Veröffentlichungstag der Anmeldung:
**14.12.88 Patentblatt 88/50**

(45) Bekanntmachung des Hinweises auf die
Patenterteilung:
**01.04.92 Patentblatt 92/14**

(84) Benannte Vertragsstaaten:
**CH DE FR GB IT LI**

(56) Entgegenhaltungen:
**DE-A- 1 627 900        DE-C- 952 254
DE-U- 7 936 269        US-A- 3 126 776
US-A- 3 918 694        US-A- 4 011 781
US-A- 4 476 762**

(73) Patentinhaber: **SIEMENS AKTIENGESELL-
SCHAFT
Wittelsbacherplatz 2
W-8000 München 2(DE)**

Patentinhaber: **BRUDERER AG
Egnacher Strasse 44
CH-9320 Frasnacht-Arbon(CH)**

(72) Erfinder: **Kröner, Josef
Am Pfaffensteig 10
W-8540 Schwabach(DE)**
Erfinder: **Messner, Helmut
Scheibenstrasse 9
CH-9320 Arbon(CH)**
Erfinder: **Hartwig, Thomas
Neue Strasse 11
W-8520 Erlangen(DE)**

(74) Vertreter: **Fuchs, Franz-Josef, Dr.-Ing. et al
Postfach 22 13 17
W-8000 München 22(DE)**

## Beschreibung

Die Erfindung bezieht sich auf einen Präzisionsstanzautomaten mit austauschbarem Werkzeug, das als sogenanntes führungsloses Werkzeug aus separaten Werkzeughälften mit Werkzeugoberteil und Werkzeugunterteil am Pressenstößel bzw. Pressentisch befestigbar ist, wobei Pressenstößel und Pressentisch außerhalb der Werkzeughälften über Führungssäulen und zugehörige Führungsbuchsen genau geführt sind und wobei die Werkzeughälften jeweils an einer Montageplatte befestigt sind, in welche Positioniereinrichtungen eingreifen (siehe z.B. DE-B-2711696).

In der Stanztechnik werden Stanzwerkzeuge eingesetzt, die im wesentlichen aus einem Werkzeugoberteil und einem Werkzeugunterteil bestehen. In diesen Werkzeughälften sind die Formteile Stempel und Matrize eingearbeitet, zwischen denen ein zu verarbeitender Werkstoff als Halbzeug über seine Fließgrenze hinaus beansprucht wird mit dem Ziel, aus ihm eine bestimmte Anzahl gleicher Werkstücke herzustellen. Die Fertigungsgenauigkeit dieser durch Umformen und Schneiden hergestellten Werkstücke hängt ab von der Form- und Maßhaltigkeit des Werkzeugs. Neben der bei der Herstellung erzielten Genauigkeit des Stanzwerkzeugs wid die Form- und Maßhaltigkeit der Stanzteile aber dadurch bestimmt, wie die beim Stanzen auftretenden Querkräfte aufgenommen werden. Relativbewegungen der Formteile in horizontaler Richtung zueinander sollen minimiert sein.

Um die beim Stanzvorgang auftretenden Querkräfte, die zu horizontalen Relativbewegungen der Formteile zueinander führen können, aufzunehmen, wurden früher Stanzwerkzeuge mit Führungen für die die Formteile aufnehmenden Werkzeughälften ausgerüstet. Durch diese Führungen wurden gleichermaßen die Werkzeughälften zueinander positioniert.

Bei letzteren Werkzeugen des Standes der Technik unterscheidet man zwischen folgenden Typen:
- Werkzeuge mit Plattenführung, bei denen eine mit dem Werkzeugunterteil fest verbundene Führungsplatte die Stempelführung und die Positionierung der Werkzeughälften übernimmt. Die Stempel dürfen dabei durch den Pressenhub die Führungsplatte nicht verlassen.
- Werkzeuge mit Säulenführung, welche entweder aus einem Säulengestell oder mit Platten aufgebaut ist, in denen die Säulen eingearbeitet sind. Dadurch wird die Führung und Positionierung der Werkzeughälften auf zwei oder mehr Säulen übertragen. Zusätzlich zur Werkzeugführung kann dabei, insbesondere bei Folgeverbundwerkzeugen mit großen Querkräften, innerhalb des Werkzeuges noch der Aufbau mit einer gefederten Stempelführungsplatte ergänzt werden.
- Werkzeuge mit Wechselgestellen, bei denen die austauschbaren Werkzeughälften in ein Wechselgestell eingesetzt werden, das die Führung und Positionierung übernimmt. Die genaue Zuordnung der Werkzeughälften und damit der Formteile ist hierbei nur im Wechselgestell gegeben.

Problematisch bei allen diesen bekannten Werkzeugen ist der vergleichsweise große Aufwand für die Werkzeugführungen, der mit hohen Kosten verbunden ist. Durch eine derartige Führungseinrichtung für die Werkzeughälften ergibt sich zudem bei Stanzautomaten mit Führung von Pressenstößel und Pressentisch eine Überbestimmung.

Speziell ein Säulenführungsgestell für auswechselbare Einbauwerkzeuge ist aus der DE-C-952 254 bekannt. Dieses Gestell ist so ausgebildet, daß durch entsprechende Gestaltung der Paßorgane an den Unter- und Oberteilen sowie an den Einsatzplatten eine genaue örtliche und gegenseitige Lagebestimmung der in die Führungen eingebauten Werkzeugteile gewährleistet sein soll. Erprobungen haben ergeben, daß ein solches aufwendiges Säulenführungsgestell für Präzisionsstanzautomaten mit über Führungssäulen und zugehörigen Führungsbuchsen genau geführtem Pressenstößel und Pressentisch nicht etwa zu einer Verbesserung sondern zu eher zu einer Verschlechterung in der Maßhaltigkeit der Stanzteile führt.

Neben den geführten Werkzeugen sind auch bereits sogenannte führungslose Werkzeuge bekannt: In der DE-B-27 11 696 wird ein Präzisionsschnittwerkzeug mit beweglichem Stößel und festem Tisch für Stanzmaschinen zum Ausschneiden von Blechteilen beschrieben, dessen aktive Werkzeugteile (Stempel und Schnittplatte) zueinander durch mindestens zwei außerhalb des Werkzeuges angeordnete, nahe der Arbeitsebene in Eingriff stehende geschlossene Schubführungen (Führungssäule in Führungsbuchse) genau geführt sind, wobei von den beiden Elementen jeder Schubführung jeweils eines mit dem Stößel und eines mit dem Tisch verbunden ist. Ein solches Stanzwerkzeug kann insbesondere einen Stanzautomaten gemäß der DE-A-22 41 639 komplettieren.

Bei letzteren führungslosen Werkzeugen ist allerdings die Positionierung und Justierung der Werkzeughälften bei Neuaufbau und Werkzeugwechsel besonders kritisch. Diese Arbeiten konnten bisher nur durch speziell geschultes Fachpersonal durchgeführt werden, so daß sich bisher derartige führungslose Werkzeuge in der Praxis nicht durchsetzen konnten.

Aufgabe der Erfindung ist es daher, einen Präzisionsstanzautomaten derart zu modifizieren, daß führungslose Werkzeuge problemlos eingesetzt und ausgetauscht werden können.

Die Aufgabe ist erfindungsgemäß bei einem Präzisionsstanzautomaten dadurch gelöst,

- daß dem Pressenstößel einerseits und dem Pressentisch andererseits jeweils zwei Positioniereinrichtungen jeder Montageplatte für die Werkzeughälften zugeordnet sind, mit denen die Lage des Werkzeugoberteils am Pressenstößel bzw. des Werkzeugunterteils am Pressentisch vorgebbar ist,
- daß die Positioniereinrichtungen hydraulische Spanndorne umfassen und
- daß die hydraulischen Spanndorne in der Diagonalen der Montageplatte angeordnet sind.

Vorzugsweise läßt dabei einer der hydraulischen Spanndorne eine in Richtung der Diagonalen verlaufende lineare Beweglichkeit der Montageplatte zu.

Aus der US-A-38 81 343 war zwar bereits eine Werkzeugbefestigungsvorrichtung bekannt, die hydraulisch arbeitende Spannmittel für die Montageplatten aufweist. Mit den dort als Klemmbacken ausgebildeten Spannmitteln soll insbesondere einem Durchbiegen der Montageplatten mit den Werkzeughälften entgegengewirkt werden, was aber zwangsläufig eine linienhafte Fixierung längs der Backen erfordert. Eine solche Befestigungsvorrichtung ist aber nur bei geführten Werkzeugen anwendbar. Die Führungsgenauigkeit von Stößel und Pressentisch des Stanzautomaten konnte somit bei diesem Stand der Technik ebenfalls nicht genutzt werden.

Durch die Erfindung wird nunmehr erstmalig die Genauigkeit der Stößelführung von Präzisionsstanzautomaten voll genutzt. Es kann damit die Führung der Stanzwerkzeuge durch die aus Führungssäulen und Führungsbuchsen bestehende Führung des Pressenstößels gegenüber dem Pressentisch ersetzt werden, was an sich bereits bekannt ist, sich aber in der Praxis wegen der zeitaufwendigen Positionierung bisher nicht hatte durchsetzen können.

Mit der Erfindung ist ein Stanzautomat mit einem solchen Positionier- und Spannsystem geschaffen, das es erlaubt, die beiden Werkzeughälften der führungslosen Werkzeuge so exakt einzuspannen, daß die Genauigkeit des Führungsverhaltens des Stößels voll auf die Werkzeuge übertragen wird. Damit ist das Problem gelöst, wie die die Formteile aufnehmenden Werkzeughälften zueinander in einer die Schneid- und Umformkräfte erzeugenden und die hierbei auftretenden Querkräfte aufnehmende Werkzeugmaschine positioniert werden und dadurch im Zusammenwirken mit den Merkmalen der Werkzeugmaschine die eingangs erwähnten Relativbewegungen minimiert werden können. Ein Werkzeugwechsel ist nunmehr bei extrem kurzen Maschinenstillstandszeiten durchführbar.

Weitere Einzelheiten und Vorteile der Erfindung ergeben sich aus der nachfolgenden Figurenbeschreibung von Ausführungsbeispielen. Es zeigen in jeweils schematischer Darstellung

FIG 1 im Querschnitt den interessierenden Bereich eines Stanzautomaten mit Pressenstößel, Pressentisch und Werkzeug,

FIG 2 in vergrößerter Darstellung die bei FIG 1 verwendete Positioniereinrichtung,

FIG 3 eine Draufsicht auf eine bei FIG 1 verwendete Montageplatte zusammen mit den jeweils verwendeten Positionierdornen,

FIG 4 und 5 Varianten von Positionierdornlagerungen zu FIG 3,

FIG 6a und 6b ein Zugspannelement in gespanntem und entspanntem Zustand und

FIG 7 eine FIG 1 entsprechende Darstellung ohne Werkzeug, aber mit zugehöriger Justierlehre.

In den Figuren sind identische Teile mit gleichen Bezugszeichen versehen. Die Figuren werden nachfolgend teilweise zusammen beschrieben.

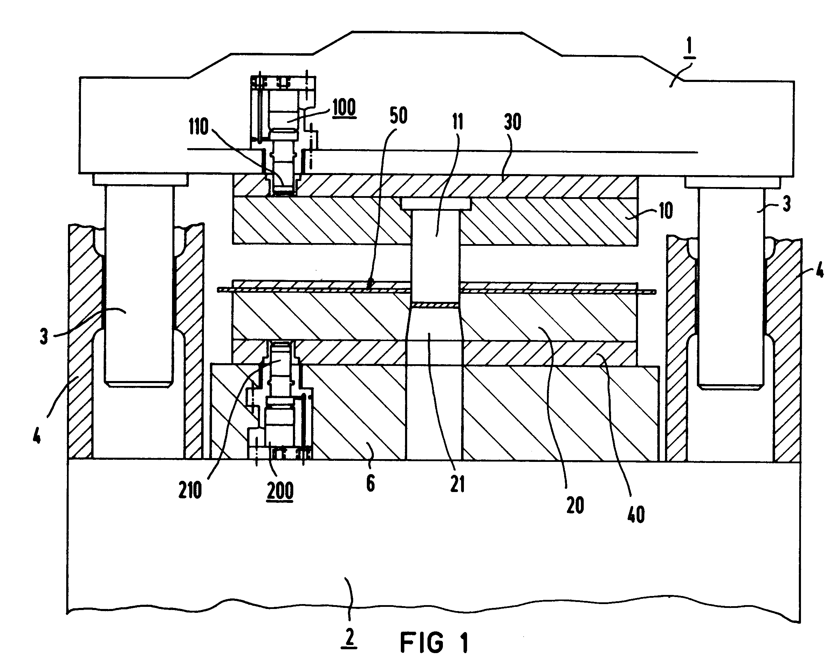

In FIG 1 ist ein Pressenstößel 1 und ein zugehöriger Pressentisch 2 eines Präzisionsstanzautomaten über Führungssäulen 3, die in Führungsbuchsen 4 eingreifen, genaugeführt. Zwischen Stößel 1 und Tisch 2 ist das Werkzeug aus Werkzeugoberteil 10 und Werkzeugunterteil 20 angeordnet und jeweils über eine Montageplatte 30 bzw. 40 mit dem Stößel 1 bzw. dem Tisch 2 verbunden, wobei zwischen dem Tisch 2 und der Montageplatte 40 noch ein Zwischenteil 6 vorgesehen ist. In das Werkzeugoberteil 10 ist ein Schneidstempel 11 integriert, der in eine entsprechend ausgebildete Schneidmatrize 21 des Werkzeugunterteils eingreift. Angedeutet ist ein durchlaufendes Band 50, das als Halbzeug für die herzustellenden Werkstücke dient.

Ein führungsloses Werkzeug der beschriebenen Art in Verbindung mit über Schubführungen geführten Pressenstößel und Pressentisch ist im wesentlichen aus der DE-PS 27 11 696 bekannt. Wesentlich ist nun, daß jeweils das Werkzeugoberteil 10 mit dem Pressenstößel 1 über Positioniereinrichtungen 100 und entsprechend das Werkzeugunterteil 20 mit dem Pressentisch 2 über Positioniereinrichtungen 200 verbunden ist. Es sind jeweils in jeder Werkzeughälfte zwei gegeneinander versetzte Positioniereinrichtungen 100 bzw. 100' vorhanden, von denen in der Schnittdarstellung nur eine erkennbar ist. Die Positioniereinrichtungen 100 bzw. 200 der beiden Werkzeughälften sind spiegelbildlich zueinander angeordnet.

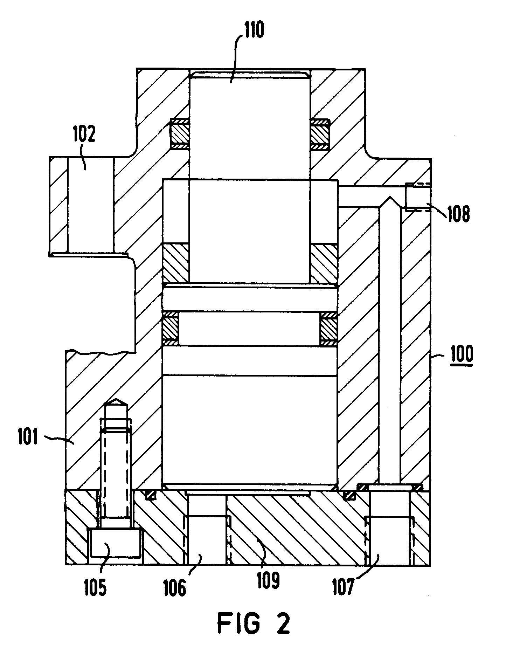

Eine Positioniereinrichtung 100 gemäß FIG 2 weist einen Grundkörper 101 mit einer Bohrung 102 zur Justierung auf und beinhaltet als wesentliches Funktionselement einen sogenannten hydraulischen Spanndorn 110. Derartige hydraulische Spanndorne sind in der Werkzeugmaschinentechnik bekannt. Entscheidend ist dabei, daß durch Druckmittelzufuhr Stifte oder Bolzen in ihrem Querschnitt verändert werden können, um somit eine lösbare Einspannung zu gewährleisten. In FIG 2 sind hierzu im Grundkörper 101 verschiedene Druckmittelleitungen 106 bis 108 angedeutet, wobei durch Schrauben 105 eine Abdichtung des Grundkörpers 101 mit einem Deckel 109 erfolgt.

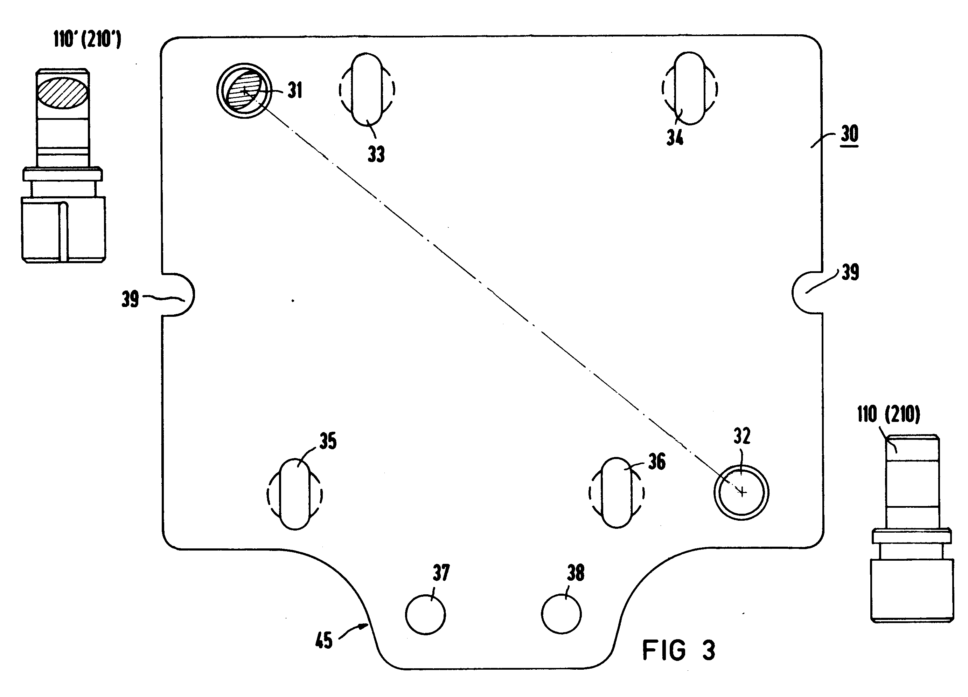

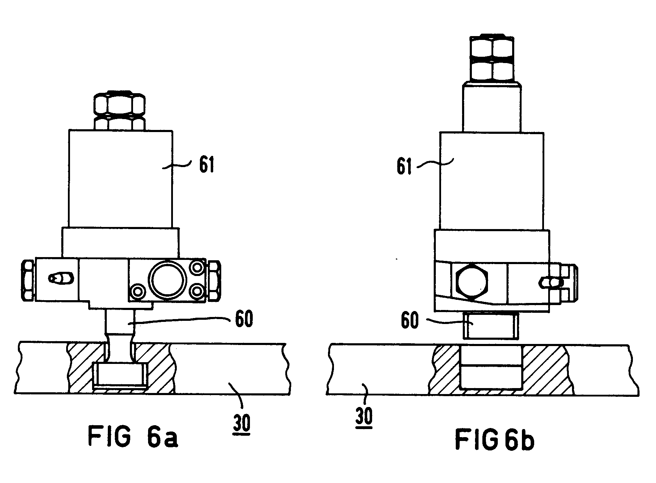

In FIG 3 weist die in ihrem Grundriß im wesentlichen rechteckige Montageplatte 30 diagonal versetzt zwei Bohrungen 31 und 32 für den Eingriff des Justierdorns 110 gemäß FIG 2 auf. Weiterhin sind asymmetrisch verteilt vier Bohrungen 33 bis 36 für in FIG 6a und 6b im einzelnen erläuterte Spannelemente 60 vorhanden. Die Montageplatte 30 weist an der Vorderseite einen trapezförmigen Ansatz 45 auf, in dem zwei weitere Bohrungen 37 und 38 eingebracht sind. Diese Bohrungen dienen zum Eingriff eines Handhabungsgerätes bei Werkzeugwechsel, auf das hier nicht weiter eingegangen wird.

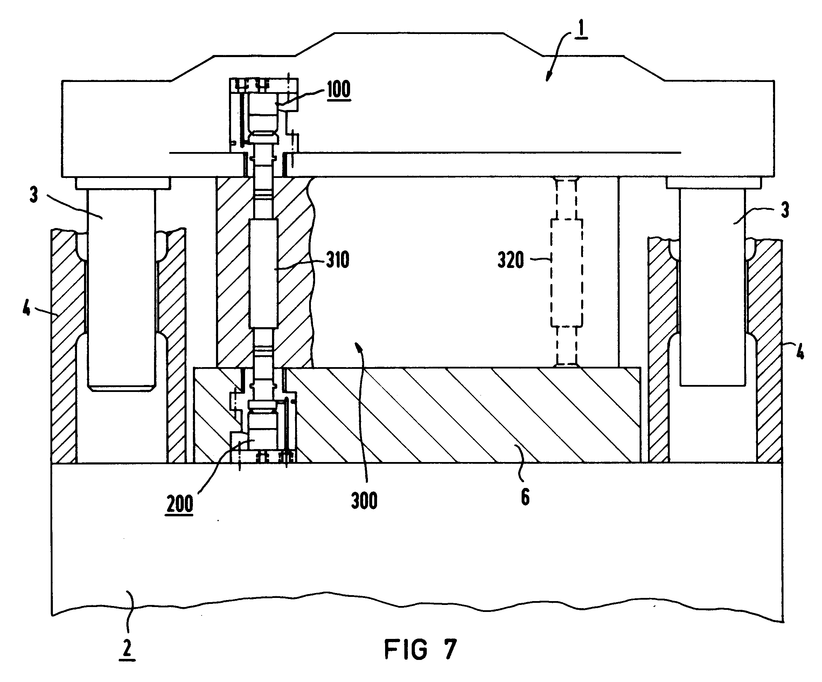

In FIG 7 ist bei einem Präzisionsstanzautomaten gemäß FIG 1 statt des Werkzeuges eine Justierlehre 300 eingebracht. Eine derartige Justierlehre 300 besteht im wesentlichen aus einem metallischen Klotz, der die funktionellen Abmessungen eines im Eingriff stehenden Stanzwerkzeuges besitzt und zwei durchgehende Bohrungen 310 und 320 aufweist.

Nachfolgend wird im einzelnen auf das Zusammenwirken der mit den Positioniereinheiten modifizierten Werkzeuge eingegangen:

Aus FIG 1 ist in Verbindung mit FIG 3 ersichtlich, daß für jede Werkzeughälfte 10 bzw. 20 jeweils zwei Positioniereinrichtungen 100 bzw. 100′ gemäß FIG 3 verwendet werden, die in der Diagonalen der Werkzeugmontageplatten 30 bzw. 40 angeordnet sind. Dabei sind alle Positioniereinrichtungen 100 bzw. 100′ und 200 bzw. 200′ mit ihrer Grundeinheit im Pressenstößel 1 bzw. im Pressentisch 2 eingebaut und dienen zur Positionierung von Werkzeugoberteil 10 am Stößel 1 und Werkzeugunterteil 20 am Tisch 2.

Funktionsteil der Positioniereinrichtungen 100 bzw. 100′ und 200 und 200′ sind die Positionierdorne 110 bzw. 110′ und 210 bzw. 210′, die aus Kolben in hydraulischen Zylindern bestehen. Die Positionierdorne 110 bzw. 110′ und 210 bzw. 210′ werden zunächst bündig mit den Aufspannflächen am Stößel 1 und Tisch 2 der Pressen angeordnet und dann von oben bzw. von unten in die obere Montageplatte 30 und die untere Montageplatte 40 eingebracht. Die eigentliche Positionierung des Werkzeuges erfolgt durch eine Aufweitung im Umfang des Teiles des Dornes 110 bzw. 110′ und 210 bzw. 210′, der im Bereich der Aufspannflächen in die Montageplatten 30 und 40 taucht. Durch die hydraulisch erzeugte Aufweitung und den dadurch gegebenen Formschluß wird die Position der Führungsbuchse der Positionierdorne 110, 110′, 210 und 210′ in der Aufspannfläche exakt auf die Buchse in der zu positionierenden Montageplatte 30 bzw. 40 übertragen.

Bei der Positionierung ist wesentlich, daß nur jeweils der eine Dorn 110 bzw. 210 am gesamten Umfang in den Aufspannflächen und in den Montageplatten 30 bzw. 40 positioniert ist, dagegen jeweils der andere Dorn 110′ bzw. 210′ nur in den Aufspannflächen. Dazu ist die Verlängerung des Zentrierdurchmessers der beiden Dorne 110′ und 210′, die nur in den Aufspannflächen positionieren, im Querschnitt oval ausgeführt und nicht aufweitbar. Die Kontaktlinie, die aufgrund der unterschiedlichen Radien vom ovalen Querschnitt des Dornes 110′ und des runden Querschnittes der Bohrung 31 entsteht, soll nur eine senkrechte Ausrichtung zu den Diagonalen durch die Positionspunkte der Montageplatte 30 bewirken. Damit können ungleich temperierte Werkzeug- und Maschinenplatten positioniert werden, ohne daß durch die Wärmedehnung aufgrund einer Temperaturangleichung eine Zwangsspannung entsteht. Es ist somit eine lineare Beweglichkeit der Montageplatten 30 und 40 in Richtung ihrer Diagonalen gewährleistet.

Fertigungstechnisch sind die Radien des ovalen Teils des Positionierdorns 110′ und 210′ sowie der zu posionierenden Bohrungen 31 in den Montageplatten 30 und 40 so aufeinander abgestimmt, daß einschließlich des notwendigen Spiels zwischen den beiden jeweils im Eingriff stehenden Elementen eine Wärmedehnung in Richtung der Diagonale - aufgeteilt in Längenänderungen in Banddurchlaufrichtung und senkrecht zur Banddurchlaufrichtung - etwa 10 % der üblichen Schneidspaltabmessungen nicht übersteigt.

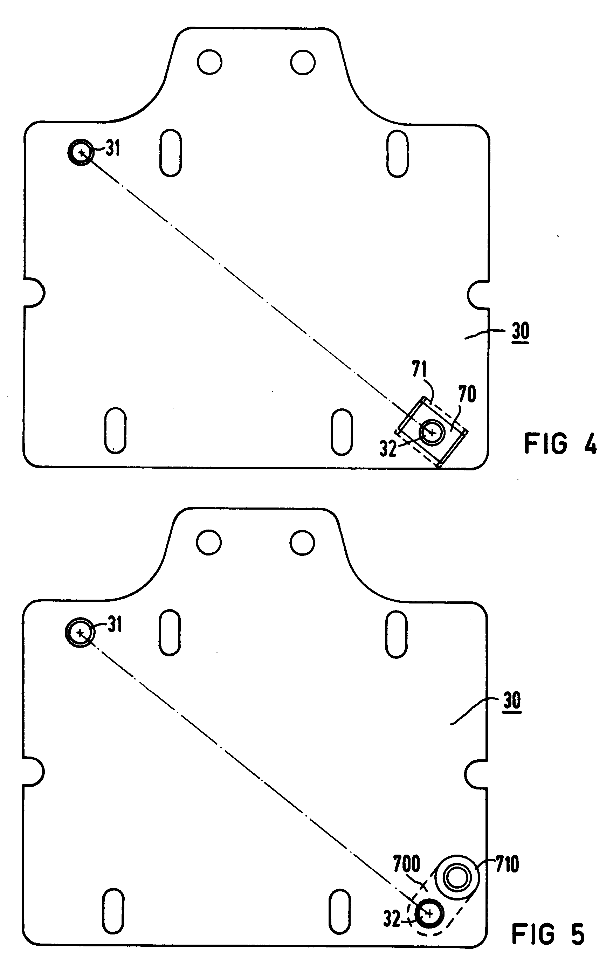

Die lineare Beweglichkeit der Montageplatten 30 bzw. 40 in Richtung ihrer Diagonalen kann auch durch die Varianten gemäß FIG 4 und 5 gewährleistet werden, die praxisgerechte Alternativen zu FIG 3 darstellen.

In FIG 4 ist ein Gleitstein 70 in einer Schwalbenschwanzführung 71 in der Montageplatte 30 dargestellt, wobei die Schwalbenschwanzführung 71 in Diagonalrichtung erstreckt ist.

In FIG 5 ist ein Wälzlager 710 vorgesehen, das einen Hebel 700 trägt, der wiederum einen der beiden Spanndorne 110, 210 aufnehmen kann. Das Wälzlager 710 ist in einem Abstand von der Diagonalen angeordnet, so daß ein Verschwenken des Hebels 700 eine im wesentlichen lineare Bewegung des Spanndornes 110, 210 entlang der Diagonalen erlaubt.

Die durch die beiden Variationen nach FIG 4 und 5 erreichte Positionierung erfolgt bei gleichen Spielverhältnissen wie gemäß FIG 3 über eine Flächenberührung, wodurch Abnutzungserscheinungen, wie sie gegebenenfalls bei ovalen Spanndornen auftreten können, vermieden werden. Beim Spanndorn 110' bzw. 210' kommt es nämlich infolge der ovalen Ausbildung zu einer Linienberührung, wodurch die Oberfläche des ovalen Bereiches einer verstärkten Abnutzung unterliegt.

In FIG 6a und 6b sind Zugspannelemente 60, die zum Festhalten der Montageplatte 30 bzw. 40 eingesetzt werden, in ihrer Spannstellung bzw. Lösestellung dargestellt. Das Zugspannelement 60 ist ein - im Schnitt betrachtet - T-förmiger Riegel, der in die Bohrungen 33 bist 36 eingesetzt wird, wobei durch Verdrehen des Riegels um 90° die Montageplatte 30 bzw. 40 verriegelt wird. Der Oberteil 61 des Zugspannelementes besteht aus hydraulischen Zug- und Drehzylindern, auf die nicht näher eingegangen wird, da Zugspannelemente für sich dem Fachmann bekannt sind.

Die Montageplatten 30 und 40 der beiden Werkzeughälften 10 und 20 werden gemäß einer der FIG 3 bis 5 weitgehend identisch ausgeführt. Sie können zusätzlich seitlich angeordnete halbkreisförmige Ausnehmungen 39 zur Sicherung der Werkzeughälften 10 und 20 in Aufnahmestationen haben, wozu als Handhabungsgerät beispielsweise ein Werkzeugwechsler in den trapezförmigen Ansatz 45 min den beiden Bohrungen 37 und 38 eingreift.

Die in FIG 6a und 6b dargestellten Zug-Spannelemente 60 sind handelsübliche hydraulische Dreh-Zug-Spanner. Wesentlich ist dabei aber, daß der hydraulische Spanndruck der einzelnen asymmetrisch versetzten Spannelemente 60 getrennt eingestellt werden kann, um durch hohen Spanndruck an den Spannelementen in der Nähe desjenigen Positionierdorns, der Aufspannfläche und Montageplatte positioniert, die Montageplatte 30 gegenüber der Aufspannplatte zu fixieren und durch niedrigen Spanndruck in der Nähe desjenigen Positionierdorns, der nur senkrecht zur Diagonalen positioniert, die Wärmedehnung in Richtung der Diagonalen zwangsfrei zuzulassen.

Um die oben beschriebene, exakte Positionierung der beiden Werkzeughälften 10 und 20 durch die Schubführungen 3 und 4 von Pressenstößel 1 und Pressentisch 2 von Verschleißerscheinungen oder Nachjustierungen an der Presse sowie anderen äußeren Einflüssen unabhängig zu machen, ist es zweckmäßig eine Justierbarkeit der Positionierelemente in den Aufspannflächen vorzusehen. Dazu dient die Justierlehre 300 gemäß FIG 7. Vor dem ersten Einsatz eines führungslosen Werkzeuges oder nach Änderungen an der Stößelführung werden die Positionierdorne 110 bzw. 110' und 210 bzw. 210' am Stößel 1 und Tisch 2 mit dieser Lehre ausgerichtet. Dazu werden die Klemmschrauben der Zylinder und/oder der Führungsbuchsen der Positioniereinrichtungen 100 bzw. 100' und 200 bzw. 200' in den Aufspannflächen gelöst und die Justierlehre 300 im Presseneinbauraum auf geschliffene Anschlagleisten im Pressentisch 2 ausgerichtet. Die Positionierdorne 110 bzw. 110' und 210 bzw. 210' der Positioniereinrichtungen 100 bzw. 100' und 200 bzw. 200' werden dann von beiden Seiten in die durchgehenden Bohrungen 310 bzw. 320 der Lehre 300 eingefahren und aufgeweitet. In diesem Zustand werden die Klemmschrauben der Zylinder und/oder der Führungsbuchsen angezogen und somit die Positioniereinrichtungen fixiert. Es kann somit das von der Justierlehre 300 exakt kopierte Maß des Abstandes der Positioniereinrichtungen auf die nachfolgend eingespannten Werkzeuge übertragen werden.

Nach der beschriebenen einmaligen Einjustierung können später die Werkzeughälften 10 und 20 führungsloser Werkzeuge ohne weitere Justierung positionsgenau und auch jederzeit reproduzierbar über die Stößelführung der Presse geführt und eingespannt werden. Damit ist ein extrem schneller Werkzeugwechsel im Rahmen einer flexiblen Fertigung möglich, wodurch insbesondere die Maschinenstillstandszeiten minimiert werden.

**Patentansprüche**

1. Präzisionsstanzautomat mit austauschbarem Werkzeug, das als sogenanntes führungsloses Werkzeug aus separaten Werkzeughälften (10, 20) mit Werkzeugoberteil und Werkzeugunterteil am Pressenstößel (1) bzw. Pressentisch (2) befestigbar ist, wobei Pressenstößel (1) und Pressentisch (2) außerhalb der Werkzeughälften (10, 20) über Führungssäulen und zugehörige Führungsbuchsen genau geführt sind und wobei die Werkzeughälften (10, 20) jeweils an einer Montageplatte (30, 40) befestigt sind, in welche Positioniereinrichtungen (100, 110'; 200, 210') eingreifen,
**dadurch gekennzeichnet,**
- daß dem Pressenstößel (1) einerseits und dem Pressentisch (2) andererseits jeweils zwei Positioniereinrichtungen (100, 100'; 200, 200') jeder Montageplatte (30, 40) für die Werkzeughälften (10, 20) zugeordnet sind, mit denen die Lage des Werkzeugoberteils (10) am Pressenstößel (1) bzw. des Werkzeugunterteils (20) am Pressentisch (2) vorgebbar ist,
- daß die Positioniereinrichtungen (100, 100'; 200, 200') hydraulische Spanndorne (110, 110; 210, 210') umfassen und

- daß die hydraulischen Spanndorne (110, 110'; 210, 210') in der Diagonalen der Montageplatte (30, 40) angeordnet sind.

2. Präzisionsstanzautomat nach Anspruch 1, **dadurch gekennzeichnet,** daß einer der hydraulischen Spanndorne (110, 110'; 210, 210') eine in Richtung der Diagonalen verlaufende lineare Beweglichkeit der Montageplatte (30, 40) zuläßt.

3. Präzisionsstanzautomat nach Anspruch 2, **dadurch gekennzeichnet,** daß der eine der hydraulischen Spanndorne (110, 210) zur Montageplatte (30, 40) hin einen runden und der andere (110', 210') einen ovalen Querschnitt hat.

4. Präzisionsstanzautomat nach Anspruch 2, **dadurch gekennzeichnet,** daß der eine der hydraulischen Spanndorne (110, 110'; 210, 210') an einem in Diagonalrichtung beweglichen Gleitstein (70) angebracht ist.

5. Präzisionsstanzautomat nach Anspruch 4, **dadurch gekennzeichnet,** daß der Gleitstein (70) aus einer in Diagonalrichtung verschiebbaren Schwalbenschwanzführung (71) gebildet ist.

6. Präzisionsstanzautomat nach Anspruch 2, **dadurch gekennzeichnet,** daß der eine der hydraulischen Spanndorne (110, 110'; 210, 210') an einem über einen Hebel (700) verschwenkbaren Wälzlager (710) angelenkt ist.

7. Präzisionsstanzautomat nach Anspruch 1, **dadurch gekennzeichnet,** daß die Montageplatte (30, 40) gleichermaßen zur Handhabung der Werkzeughälften (10, 20) bei Werkzeugwechsel und/oder Transport dient.

8. Präzisionsstanzautomat nach Anspruch 7, **dadurch gekennzeichnet,** daß die Montageplatte (30, 40) Eingriffsmittel (37, 38) für Handhabungsgeräte aufweist.

9. Präzisionsstanzautomat nach Anspruch 1, **dadurch gekennzeichnet,** daß für die Positioniereinrichtungen (100, 100'; 200, 200') eine Justierlehre (300) vorhanden ist.

10. Präzisionsstanzautomat nach Anspruch 9, **dadurch gekennzeichnet,** daß die Justierlehre (300) ein Klotz ist, der die funktionellen Abmessungen der in Eingriff stehenden Werkzeughälften (10, 20) hat und zwei durchgehende Bohrungen (310, 320) aufweist.

11. Präzisionsstanzautomat nach Anspruch 1, **dadurch gekennzeichnet,** daß jeder Montageplatte (30, 40) mehrere, vorzugsweise vier, Spannelemente (60) zum Fixieren der positionierten Werkzeughälften (10, 20) am Pressenstößel 81) bzw. Pressentisch (2) zugeordnet sind.

12. Präzisionsstanzautomat nach Anspruch 11, **dadurch gekennzeichnet,** daß die Spannelemente (60) unsymmetrisch auf der Montageplatte (30, 40) angeordnet sind.

13. Präzisionsstanzautomat nach Anspruch 12, **dadurch gekennzeichnet,** daß die Spannelemente (60) vorzugsweise hydraulische Dreh-Zug-Spanner sind, die separat mit unterschiedlichem Spanndruck einstellbar sind.

## Claims

1. Automatic precision stamping press having exchangeable tool which as a so-called guideless tool consisting of separate tool halves (10, 20) with an upper tool portion and a lower tool portion can be secured to the press plunger (1) and press table (2) respectively, the press plunger (1) and the press table (2) being guided exactly outside the tool halves (10, 20) by means of guiding columns and associated guiding sleeves and the tool halves (10, 20) each being secured to a mounting plate (30, 40), into which positioning devices (100, 110'; 200, 210') engage, characterised
   - in that there are associated with the press plunger (1), on the one hand, and the press table (2), on the other hand, two respective positioning devices (100, 100'; 200, 200') for each mounting plate (30, 40) for the tool halves (10, 20), with which devices the position of the upper tool portion (10) on the press plunger (1) and of the lower tool portion (20) on the press table (2) respectively can be preset;
   - in that the positioning devices (100, 100'; 200, 200') comprise hydraulic clamping plugs (110, 110, 210, 210'), and
   - in that the hydraulic clamping plugs (110, 110'; 210, 210') are arranged on the diagonals of the mounting plate (30, 40).

2. Automatic precision stamping press according to claim 1, characterised in that one of the hydraulic clamping plugs (110, 110'; 210, 210') permits linear movability of the mounting plate (30, 40) in the direction of the diagonals.

3. Automatic precision stamping press according to claim 2, characterised in that the one of the hydraulic clamping plugs (110, 210) nearer the mounting plate (30, 40) has a round cross section and the other (110', 210') has an oval cross section.

4. Automatic precision stamping press according to claim 2, characterised in that one of the hydraulic clamping plugs (110, 110'; 210, 210') is provided on a slide block (70) which can be moved in the diagonal direction.

5. Automatic precision stamping press according to claim 4, characterised in that the slide block (70) is formed from a dove-tail guide (71) which can be displaced in the diagonal direction.

6. Automatic precision stamping press according to claim 2, characterised in that one of the hydraulic clamping plugs (110, 110'; 210, 210') is pivoted on a rolling bearing (710) which can be swivelled by way of a lever (700).

7. Automatic precision stamping press according to claim 1, characterised in that the mounting plate (30, 40) in like manner serves to handle the tool halves (10, 20) in the case of tool change and/or transportation.

8. Automatic precision stamping press according to claim 7, characterised in that the mounting plate (30, 40) has engagement means (37, 38) for handling gear.

9. Automatic precision stamping press according to claim 1, characterised in that there is an adjustment gauge (300) for the positioning devices (100, 100'; 200, 200').

10. Automatic precision stamping press according to claim 9, characterised in that the adjustment gauge (300) is a block which has the functional dimensions of the engaged tool halves (10, 20) and has two through bore holes (310, 320).

11. Automatic precision stamping press according to claim 1, characterised in that associated with each mounting plate (30, 40) there are several, preferably four, clamping elements (60) for fixing the positioned tool halves (10, 20) on the press plunger (1) and the press table (2) respectively.

12. Automatic precision stamping press according to claim 11, characterised in that the clamping elements (60) are arranged asymmetrically on the mounting plate (30, 40).

13. Automatic precision stamping press according to claim 12, characterised in that the clamping elements (60) are preferably hydraulic rotary - tension tighteners which can be adjusted separately with different clamping pressure.

**Revendications**

1. Presse automatique à estamper de précision comportant un outil interchangeable, qui peut être fixé sous la forme de ce qu'on appelle un outil non guidé, formé de moitiés séparées (10,20) et comportant une partie supérieure et une partie inférieure sur le poinçon de presse (1) ou sur la table de presse (2), le poinçon de presse (1) et la table de presse (2) étant guidés de façon précise à l'extérieur des moitiés (10,20) de l'outil par l'intermédiaire de colonnes de guidage et de douilles associées de guidage, et les moitiés (10,20) de l'outil étant fixées respectivement sur des plaques de montage (30,40), dans lesquelles s'engagent des dispositifs de positionnement (100,110'; 200,210'),
caractérisée par le fait
   - qu'au poinçon de presse (1), d'une part, et à la table de presse (2), d'autre part, sont associés respectivement deux dispositifs de positionnement (100,100'; 200,200') de chaque plaque de montage (30,40) pour les moitiés (10,20) de l'outil, et à l'aide desquels la position de la partie supérieure de l'outil sur le poinçon de presse (1) ou de la partie inférieure (20) de l'outil sur la presse (2) peut être prédéterminée,
   - que les dispositifs de positionnement (100,100'; 200,200') comportent des mandrins de serrage hydrauliques (110,110'; 210,210'), et
   - que les mandrins de serrage hydrauliques (110,110'; 210, 210') sont disposés sur les diagonales de la plaque de montage (30,40).

2. Presse automatique à estamper de précision suivant la revendication 1, caractérisée par le fait qu'un des mandrins de serrage hydrauliques (110,110'; 210,210') autorise une mobilité linéaire, dans la direction des diagonales, de la plaque de montage (30,40).

3. Presse automatique à estamper de précision suivant la revendication 2, caractérisée par le fait que l'un des mandrins de serrage hydrauliques (110,210) possède en direction de la plaque de montage (30,40) une section transversale circulaire et que l'autre (110' ,210') possède une section transversale ovale.

4. Presse automatique à estamper de précision suivant la revendication 2, caractérisée par le fait qu'un des mandrins de serrage hydrauliques (110,110'; 210,210') est disposé sur un coulisseau (70) mobile dans la direction des diagonales.

5. Presse automatique à estamper de précision suivant la revendication 4, caractérisée par le fait que le coulisseau (70) est formé par un guide en queue d'aronde (71) déplaçable dans la direction des diagonales.

6. Presse automatique estampée de précision suivant la revendication 2, caractérisée par le fait que l'un des mandrins de serrage hydrauliques (110,110'; 210,210') est articulé sur un roulement (710) pouvant pivoter autour d'un levier (700).

7. Presse automatique à estamper de précision suivant la revendication 1, caractérisée par le fait que la plaque de montage (30,40) sert de la même manière à manipuler les moitiés (10,20) de l'outil dans le cas d'un changement de l'outil et/ou d'un transport.

8. Presse automatique à estamper de précision suivant la revendication 7, caractérisée par le fait que la plaque de montage (30,40) comporte des moyens de préhension (37,38) pour des appareils de manipulation.

9. Presse automatique à estamper de précision suivant la revendication 1, caractérisée par le fait qu'un calibre d'ajustement (300) est prévu pour le dispositif de positionnement (100,100'; 200,200').

10. Presse automatique à estamper de précision suivant la revendication 9, caractérisée par le fait que le calibre d'ajustement (300) est un sabot qui possède les dimensions fonctionnelles des moitiés (10,20) de l'outil qui sont en prise, et qui possède deux perçages traversants (310,320).

11. Presse automatique à estamper de précision suivant la revendication 1, caractérisée par le fait qu'à chaque plaque de montage (30,40) sont associés plusieurs, de préférence quatre éléments de serrage (60) servant à fixer les moitiés positionnées (10,20) de l'outil sur le poinçon de presse (81) ou sur la table de presse (2).

12. Presse automatique à estamper de précision suivant la revendication 11, caractérisée par le fait que les éléments de serrage (60) sont disposés de façon dissymétrique sur la plaque de montage (30,40).

13. Presse automatique à estamper de précision suivant la revendication 12, caractérisée par le fait que les éléments de serrage (60) sont des dispositifs de serrage de préférence hydraulique à rotation et traction, qui peuvent être réglés séparément avec des pressions de serrage différentes.

FIG 1

FIG 2

110' (210')

31

33

34

30

39

39

35

36

32

37

38

45

FIG 3

EP 0 294 765 B1

110 (210)

FIG 4

FIG 5

61

60

30

**FIG 6a**

61

60

30

**FIG 6b**

FIG 7

EP 0 294 765 B1